# EUROPEAN PATENT APPLICATION

(11) **EP 4 462 832 A1**
(43) Date of publication of application: **13.11.2024**
(21) Application number: 23753104.1
(22) Date of filing: 07.02.2023
(51) Int. Cl.: H04W 8/02, H04W 8/24, H04W 4/90, H04W 24/04, H04W 48/16, H04W 48/18, H04W 60/00

(54) **TERMINAL MOBILITY MANAGEMENT METHOD AND DEVICE USING NAS**

(30) Priority: 09.02.2022 KR 20220017148
(71) Applicant: Samsung Electronics Co., Ltd, Suwon-si, Gyeonggi-do 16677 (KR)
(72) Inventor: SUH, Kyungjoo, Suwon-si, Gyeonggi-do 16677 (KR)
(74) Representative: Gulde & Partner
(86) International application number: PCT/KR2023/001702
(87) International publication number: WO 2023/153755

(57) **Abstract**

The present disclosure relates to a 5G or 6G communication system for supporting higher data transmission rates. The present disclosure may provide a device and method for managing the mobility of a terminal in a wireless communication system. Disclosed is a method for selecting a PLMN or SNPN, in a process of confirming service disruption of a first communication provider communication network and utilizing service of a second communication provider communication network, on the basis of capability information about the ability of a terminal in a wireless communication system to utilize a communication network of a provider that the terminal is not subscribed to in a disaster situation.

## Description

### [Technical Field]

The present disclosure relates to a device and method for managing the mobility of a terminal in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

The purpose of the present disclosure is to provide a device and method for managing the mobility of a terminal in a wireless communication system.

The technical subjects pursued in the present disclosure may not be limited to the above mentioned technical subjects, and other technical subjects which are not mentioned may be clearly understood, through the following descriptions, by those skilled in the art to which the disclosure pertains.

### [Technical Solution]

To solve the above problems, the present disclosure is characterized to comprise in a method for a terminal in a wireless communication system: receiving, from a user data management (UDM) or a first access and mobility management function (AMF), capability information about the ability to utilize a communication network of a second communication provider when a service disruption occurs in the communication network of a first communication provider to which the terminal is subscribed; confirming the occurrence of a service disruption in the communication network of the first communication provider; performing a scan for a public land mobile network (PLMN) or standalone non public network (SNPN) of the second communication provider; and selecting a PLMN to perform a registration based on a result of the scan.

According to one embodiment, the method may further comprise: transmitting a first registration request message to the first AMF; and receiving a first registration accept message from the first AMF, wherein the first registration accept message may include information related to a standalone non public network (SNPN).

According to one embodiment, the information related to the SNPN may include information about at least one of a subscribed SNPN, a preferred SNPN, or a high priority SNPN.

According to one embodiment, the first registration accept message may comprise a list of disaster PLMNs (DPLMNs), wherein selecting a PLMN may be characterized to be performed based on PLMN information or SNPN information included in the DPLMN list.

According to one embodiment, the method further comprises storing the list of disaster PLMNs (DPLMNs) included in the first registration accept message as operator controlled PLMNs, wherein selecting the PLMNs or SNPNs may be performed based on PLMN information or SNPN information included in the operator controlled PLMNs.

According to one embodiment, the method further comprises transmitting a second registration request message to a second AMF connected to the RAN of the second communication provider, wherein the second registration request message may include a disaster indicator for a disaster situation in the communication network of the first communication provider.

According to one embodiment, the method further comprises receiving, from a second AMF of a core network connected to the RAN of the second communication provider, a second registration accept message in response to the second registration request message, wherein the second registration accept message may further include an identifier or bit indicating a disaster situation, and the second registration accept message may further include timer information for a duration for which service from the second communication provider is permitted to the terminal.

In the method, selecting the PLMN may be performed based on the following prioritization: (1) a registered PLMN (RPLMN), an equivalent PLMN (EPLMN), or a disaster PLMN (DPLMN); (2) a user-controlled PLMN; (3) an operator-controlled PLMN; (4) a PLMN reported by an access stratum (AS).

To solve the above problems, the present disclosure relates to a terminal in a wireless communication system comprising: a transceiver; and a control unit configured to: receive, from a user data management (UDM) or a first access and mobility management function (AMF), capability information about the ability to utilize a communication network of a second communication provider when a service disruption occurs in the communication network of a first communication provider to which the terminal is subscribed; confirm the occurrence of a service disruption in the communication network of the first communication provider; transmit an RRC connection request message to a RAN (radio access network) of the second communication provider; receive an RRC connection establishment message from the RAN of the second communication provider; perform a scan for a public land mobile network (PLMN) or standalone non public network (SNPN) of the second communication provider; and select a PLMN or SNPN to perform a registration based on the result of the scan.

### [Advantageous Effects]

According to one embodiment of the present disclosure, managing the mobility of a terminal in a wireless communication system may be efficiently supported.

Advantageous effects obtainable from the disclosure may not be limited to the above mentioned effects, and other effects which are not mentioned may be clearly understood, through the following descriptions, by those skilled in the art to which the disclosure pertains.

### [Description of Drawings]

FIG. 1 illustrates an example of a terminal and a network environment for managing the mobility of a terminal in a 5G network according to one embodiment of the present disclosure.
FIG. 2 is a flowchart illustrating a procedure for managing the mobility of a terminal using NAS messages in a 5G network environment according to one embodiment of the present disclosure.
FIG. 3 is a diagram illustrating a configuration of a terminal according to one embodiment of the present disclosure.
FIG. 4 is a diagram illustrating a configuration of a network entity according to one embodiment of the present disclosure.

### [Mode for Disclosure]

Hereinafter, embodiments of the present disclosure will be described in detail with reference to the attached drawings. In describing the embodiments, description of technical content that is well known in the technical field to which this disclosure belongs and that is not directly related to this disclosure will be omitted. This is to convey the gist of the present disclosure more clearly without obscuring it by omitting unnecessary explanation.

For the same reason, some components in the attached drawings are exaggerated, omitted, or schematically shown. In addition, the size of each component does not entirely reflect its actual size. In each drawing, identical or corresponding components are assigned the same reference numbers.

The advantages and features of the present disclosure, and the methods of achieving them, will be clarified by reference to the embodiments described in detail below along with the accompanying drawings. However, the present disclosure is not limited to the embodiments disclosed hereinafter, but may be implemented in a variety of different forms, and the present embodiments are provided only to ensure that the disclosure of the present disclosure is complete, and to fully inform the scope of disclosure to persons of ordinary knowledge in the technical field to which the present disclosure pertains, and the present disclosure is only defined by the categories of claims. Throughout the specification, the same reference numerals refer to the same components.

At this time, it will be understood that each block of the processing flowchart illustrations and combinations of the flowchart illustrations may be performed by computer program instructions.

In addition, each block may represent a module, a segment, or a portion of code comprising one or more executable instructions for performing a specified logical function(s). It should also be noted that in some alternative embodiments, the functions recited in the blocks may occur out of sequence. For example, two blocks shown one after the other may in fact be performed substantially simultaneously, or the blocks may be performed in reverse order according to the functions they sometimes perform.

At this time, the term '~ unit' used in the present embodiment refers to software or a hardware component such as a Field Programmable Gate Array (FPGA) or an Application Specific Integrated Circuit (ASIC), which may perform any of the roles. However, '~ unit' is not software or hardware specific. It may be configured to reside on an addressable storage medium, or it may be configured to execute one or more processors. Therefore, in one example, '-unit' includes components such as software components, object-oriented software components, class components, and task components, processes, functions, properties, procedures, subroutines, segments of program code, drivers, firmware, microcode, circuits, data, databases, data structures, tables, arrays, and variables. The functionality provided within the components and '~ units' may be combined into fewer components and '~ units', or further separated into additional components and '~ units'. Furthermore, the components and '~ units' may be implemented to play one or more CPUs within the device or the security multimedia card. In addition, in one embodiment, '~ unit' may include one or more processors.

As used in the following description, terms for identifying access nodes, terms for referring to network entities, terms for referring to messages, terms for referring to interfaces between network entities, terms for referring to various identifying information, and terms for referring to various identifying information are exemplified for purposes of illustration. Accordingly, the present disclosure is not limited to the terms described herein, and other terms may be used to refer to objects having equivalent technical meaning.

For the purposes of the following description, this disclosure uses terms and designations defined in the 3rd Generation Partnership Project Long Term Evolution (3GPP LTE) standards, or variations thereof. However, this disclosure is not limited by such terms and designations and may be equally applicable to systems based on other standards. In this disclosure, the term eNB may be used interchangeably with gNB for ease of description, i.e., a base station described as an eNB may also refer to a gNB. In this disclosure, the term terminal may refer to a variety of wireless communication devices, including cell phones, NB-IoT devices, sensors, and other devices.

In other words, while the embodiments of the present disclosure will be described with particular reference to telecommunications standards specified by the 3GPP, the general principles of the present disclosure may be applied to other telecommunications systems having a similar technical background with minor modifications that do not substantially depart from the scope of the present disclosure, as will be apparent to those skilled in the art.

In 5G or NR system, the Access and Mobility management Function (AMF), the management entity that manages the mobility of the terminal, and the Session Management Function (SMF), the entity that manages the session, are separated. As a result, unlike the Mobility Management Entity (MME) in 4G LTE communication systems, which performed mobility management and session management together, in 5G or NR systems, the entity that performs mobility management and the entity that performs session management are separated, which changes the communication method and communication management method between the terminal and the network entity.

In a 5G or NR system, for non-3GPP access, mobility management is performed through AMF through the Non-3GPP Inter-Working Function (N3IWF) and session management through SMF. In addition, security-related information, which is an important element in mobility management, is also processed through AMF.

As described above, in 4G LTE systems, the MME is responsible for both mobility management and session management. In a 5G or NR system, a non-standalone architecture that performs communications utilizing network entities from these 4G LTE systems together may be supported.

The disclosure describes a method for a terminal, that subscribes to a communications network of an operator A and that receives services from the communications network of operator A, to receive services from another operator when the communications network of operator A is temporarily disrupted.

In the above case, the communication provider providing services to the terminal may be changed, and accordingly the terminal may receive services from the non public network of the changed communication provider. For example, if a terminal subscribed to the communication network of operator A is unable to utilize the communication network of operator A due to a failure of the communication network of operator A, such as a fire at a communication base station, the terminal may be provided with services through the non public network of operator B, or the terminal may be able to communicate with the non public network of operator B, thereby solving the problem described above.

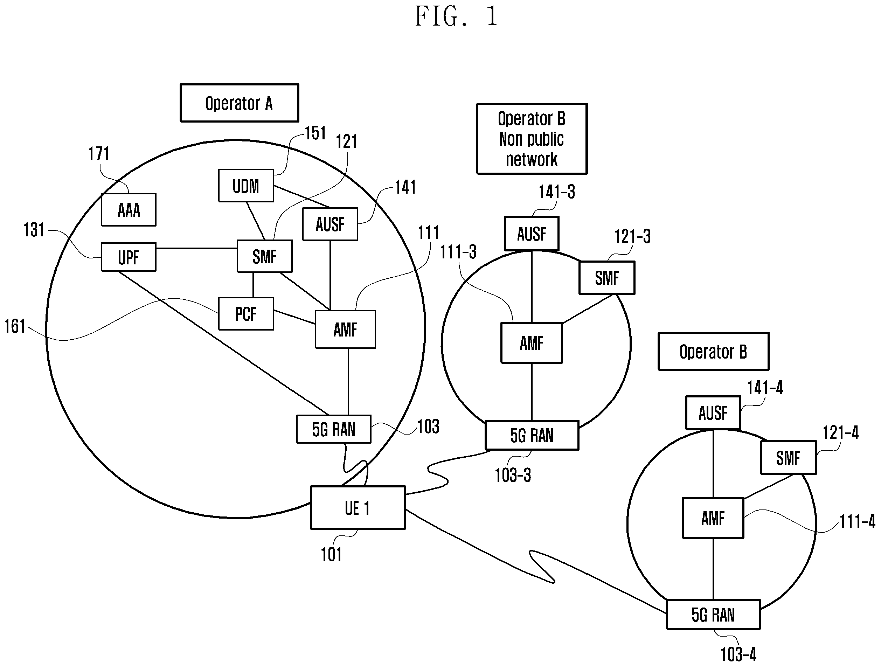

FIG.1 illustrates an example of a terminal and a network environment for managing the mobility of a terminal in a 5G network according to one embodiment of the present disclosure.

With reference to FIG. 1, a 5G or NR core network may be constituted of a network function (NF) such as a user plane function (UPF) 131, a session management function (SMF) 121, an access and mobility management function (AMF) 111, a 5G radio access network (RAN, base station, gNB) 103, a user data management (UDM) 151, a policy control function (PCF) 161, etc. In addition, for authentication of these entities, the 5G or NR core network may further include entities such as Authentication Server Function (AUSF) 141 and authentication, authorization and accounting (AAA) 171, etc.

The UE (User Equipment, Terminal) 101 may access the 5G core network through the base station (5GRAN, Radio Access Network, base station, BS, gNB) 103. A non-3GPP interworking function (N3IWF) exists for the case where the UE 101 communicates through non-3GPP access, and when the UE 101 communicates through non-3GPP access, session management may be controlled by the UE 101, non-3GPP access, N3IWF, and SMF 121, and mobility management may be controlled by the UE 101, non-3GPP access, N3IWF, and AMF 111.

In a 5G or NR system, the entities that perform mobility management and session management are separated into AMF 111 and SMF 121. On the other hand, in a 5G or NR system, a standalone deployment structure that performs communication only with 5G or NR entities and a non-standalone deployment structure that uses 4G entities and 5G or NR entities together are being considered.

As shown in FIG. 1, a deployment may be feasible where control for UE 101 communicating with the network is performed by the base station 103 and a 5G entity of the core network is utilized. In such a case, mobility management between the UE 101 and the AMF 111 and session management between the UE 101 and the SMF 121 may be performed at layer 3, the Non Access Stratum (NAS) layer. On the other hand, the Access Stratum (AS), which is layer 2, may be transmitted between the UE 101 and the base station 103.

The communication networks on which this disclosure is based assume 5G and 4G LTE networks, but the same concepts may be applied to other systems within the scope that those with ordinary skill in the art can understand.

With reference to FIG. 1, the UE 101 may be subscribed to operator A and be receiving services from operator A. If the operator A's network fails due to a communication equipment fire, a communication network fire, or a temporary (e.g., for a few hours) loss of communications from communications equipment, the UE 101 may be configured to temporarily use operator B, or a non public network of operator B, if it is an agreement between operator A and operator B, or a non public network of operator B, to use operator B in the event of a failure in operator A's network.

In one embodiment, the terminal 101 may temporarily use the communication network of operator B in the event of a communication failure of operator A.

In another embodiment, the terminal 101 may temporarily use the communication network of the operator B non public network in the event of a communication failure of the operator A.

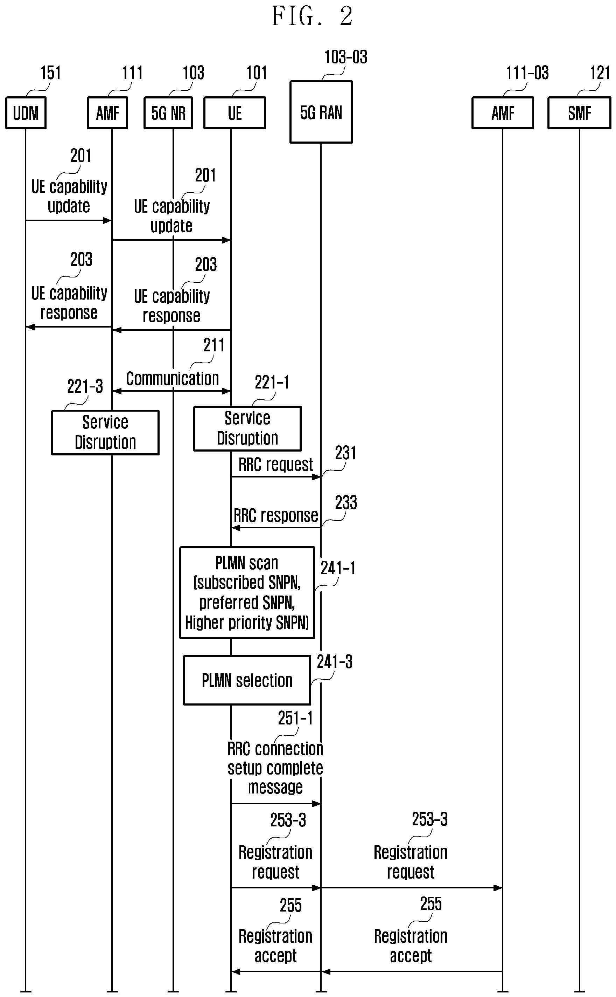

FIG. 2 is a flowchart illustrating a procedure for managing the mobility of a terminal using NAS messages in a 5G network environment according to one embodiment of the present disclosure.

FIG. 2 is a flowchart illustrating a procedure for providing communication in a 5G network without service disruption in the event of a communication network anomaly according to one embodiment of the present disclosure.

In one embodiment (case 1), in step 201, the UDM 151 may update the capability of the UE 101 to temporarily receive service on the network of operator B in the event of a temporary service disruption in the network of operator A, even if the UE 101 is not a subscriber of operator B, based on an agreement between operator A and operator B. According to one embodiment, the UE capability update message may be transmitted to the UE 101 through the AFM 111.

In step 203, the UE 101 may send a response message to the UDM 151 about the UE capability update. Depending on the embodiment, the response message may be transmitted to the UDM 151 through the AFM 111.

In another embodiment (case 2), the UE 101 may receive information such as subscribed SNPNs, preferred SNPNs, high priority SNPNs, etc. that the UE 101 can access during the process of receiving the registration request and the registration accept. In other words, when the UE 101 sends a registration request to the AMF 111 and receives a registration accept from the AMF 111, the UE 101 may receive information such as subscribed SNPNs, preferred SNPNs, high priority SNPNs, etc. that the UE 101 can access.

In another embodiment (case 3), the UE 101 may receive information such as subscribed SNPNs (standalone non public networks), preferred SNPNs, high priority SNPNs, etc. that the UE 101 can access during the RRC connection setup process. In other words, when the UE 101 sends the RRC connection request to the NR (5G RAN) 103, and receives the RRC connection setup from the RAN 103, the UE 101 may receive information such as the subscribed SNPN (standalone non public network), preferred SNPN, high priority SNPN, etc. to which the UE 101 can connect.

With reference to step 211, the UE 101 may be performing a communication on the operator A network, or the UE 101 may be a subscriber to the operator A network and is attempting to perform a communication on the operator A network.

With reference to steps 221-1 and 221-3, a situation may arise where the UE 101 is performing communication in the operator A network and an abnormality occurs in the communication equipment of the operator A network, such that communication cannot be performed, or communication is impaired, resulting in a service disruption. Such a service disruption situation may occur, for example, in the event of a fire at a communications office, base station, or equipment.

With reference to step 231, as in the example above, in the event of a problem in the network of operator A, the UE 101 may temporarily receive service on the network of operator B, even if the UE 101 is not a subscriber of operator B, based on an agreement between operator A and operator B.

From step 211 onwards, the present disclosure describes the operation of the UE 101 on a network that is not the network to which the UE 101 is subscribed, but which has an agreement with the communication provider to which the UE 101 is subscribed, or which has been designated by national regulation to allow service in the event that the communication provider network to which the UE 101 is subscribed is down, or which is designated for emergency or disaster situations, for example, in the present disclosure, the operator B network.

In particular, the disclosure describes the operation in the case where it is also possible to use the non public network of operator B as an example.

With reference to step 231, the UE 101 may transmit an RRC connection request message to the 5G RAN belonging to the operator B network. This is an attempt by the idle UE 101 to establish an RRC connection in order to perform a call attempt, a data transfer attempt, or a response to a paging. The 5G RAN may belong to operator B 103-04 or may belong to a non public network of operator B 103-03.

With reference to step 233, the UE 101 may receive an RRC connection setup message, which is a response message, from the 5G RAN 103-03. This operation may be performed in the case that the 5G RAN 103-03 has accepted the connection request from the UE 101. Upon receiving information from the UE 101 about the disaster situation, the 5G RAN 103-03 may transmit an RRC connection setup message to the UE 101 attempting to connect to 5G with the information that it is in a disaster situation if the operator (e.g., operator B in this example) to which the UE 101 is attempting to connect has an agreement with the operator (e.g., operator A in this example) to which the UE 101 is subscribed, even though the UE 101 is not a subscribed UE in that operator's network, or if the operator temporarily provides service to the UE 101 due to regulation, national policy, etc.

According to one embodiment, in this case, the UE 101 may receive information such as subscribed standalone non public networks (SNPNs), preferred SNPNs, high priority SNPNs, etc. to which the UE 101 has access.

In step 241-1, the UE 101 may scan the public land mobile network (PLMN). When the UE 101 scans the PLMNs, the UE 101 may scan subscribed SNPNs, preferred SNPNs, high priority SNPNs, etc. that the UE 101 can access. During this PLMN scan, not only the PLMNs that the UE 101 can access, but also the non public networks that the UE 101 can access may be scanned.

In step 241-3, the UE 101 may perform the following steps with respect to selecting the PLMN. The SNPN and PLMN may be identified by a mobile country code (MCC) and a mobile network code (MNC).

SNPN related information may include subscribed SNPNs, preferred SNPNs, high priority SNPN information, etc.

Subscribed SNPNs may include SNPNs that the UE 101 is subscribed to, or subscribed SNPN information that the UE 101 is allowed to access in a disaster situation.

Preferred SNPN may include information about the preferred SNPNs of the UE 101, or the SNPNs that the network prefers to allow the UE 101 to access.

High priority SNPN may include information of a high priority SNPN among the SNPNs.

The PLMN information of the cell may be included in the system information and broadcast.

When the UE 101 is initially powered on, it searches for available PLMNs and selects an appropriate PLMN to receive services. The NAS layer of the UE 101 notifies the AS layer that a PLMN selection is required. The AS layer of the UE 101 searches the frequency bands of the communication networks that the UE 101 can utilize and provides a list of PLMNs to the NAS layer.

The NAS layer of the UE 101 may select a PLMN for registering the UE 101 according to the priority order of the PLMN/RAT selection stored in the user services identity module (USIM).

The UE 101 searches for a suitable cell among the cells to which the PLMN belongs and selects a cell that can provide the appropriate service. A suitable cell is a cell in which the UE 101 can receive regular services, which is an acceptable cell, but also a cell that belongs to the PLMN to which the UE 101 has access and is not prohibited from performing the registration process.

On the other hand, a cell in which the terminal 101 can receive limited service is referred to as an acceptable cell. An acceptable cell is a cell that satisfies the cell selection criteria of the terminal 101 without barring the terminal 101 from camping on the acceptable cell. In other words, an acceptable cell is a cell that satisfies signal strength, signal quality, etc. The case where the terminal 101 receives limited service may be when it is provided with services related to emergency calls or disaster warning systems (e.g., ETWS: earthquake and tsuami warning system), and these services may be provided by acceptable cells.

### Case 1)

The following is an automatic PLMN selection method, and the priority order of the PLMN selection method may be as follows.

In one embodiment, the UE 101 selects a PLMN in the following order.

### 1) RPLMN (registered PLMN), EPLMN (equivalent PLMN), or DPLMN (disaster PLMN)

Here, DPLMN may be a PLMN that the UE can access, register with and receive services from in a disaster situation. This DPLMN may be included in the registration accept message and transmitted to the UE from the AMF if the UE successfully registers with the home PLMN (HPLMN).

### Case 1-1)

In one embodiment, the PLMN information that is accessible to the UE in the disaster situation and the SNPN information that is accessible to the UE may be included in the DPLMN list in the registration accept message.

In one embodiment, among the PLMNs accessible to the UE in the disaster situation may be subscribed SNPNs that are subscribed for the UE to utilize in the disaster situation.

In one embodiment, among the PLMNs accessible to the UE in the disaster situation, there may be preferred SNPNs that are preferred, i.e., have a preference, for the UE to utilize in the disaster situation.

### Case 1-2)

In one embodiment, the PLMN information that the UE can access in a disaster situation and the SNPN information that the UE can access may be transmitted in the EPLMN list of the registration accept message. That is, the DPLMN, which is the PLMN that the UE can register in a disaster situation, may be transmitted from the AMF to the UE through the information element, which is the list of EPLMNs to be transmitted.

In one embodiment, among the PLMNs that the UE can access in a disaster situation may be the subscribed SNPNs that the UE is subscribed to utilize in a disaster situation.

In one embodiment, among the PLMNs accessible to the UE in the disaster situation may be preferred SNPNs that are preferred, i.e., have a preference, for the UE to utilize in the disaster situation.

### 2) user controlled PLMN and access technology

### 3) operator controlled PLMN and access technology

### 4) PLMN reported by the AS to be a high quality PLMN

### Case 2)

The following is an automatic PLMN selection method, and the priority order of the PLMN selection methods may be as follows.

In one embodiment, the UE selects the PLMNs in the following order.
1) RPLMN or EPLMN
2) user controlled PLMN and access technology
3) operator controlled PLMN and access technology

Operator controlled PLMNs may be information transmitted by the operator to the UE. Such operator controlled PLMN may be PLMN information that is configured in the UE by the operator. According to one embodiment, where the operator controlled PLMN is stored in the UE, it may be stored in the UE's USIM, volatile memory, non-volatile memory, etc.

Alternatively, the operator controlled PLMN may include DPLMN information that can be used in a disaster situation.

### Case 2-1)

In one embodiment, the PLMN information that is accessible to the UE in a disaster situation and the SNPN information that is accessible to the UE may be pre-configured in the operator controlled PLMN list and configured in the UE in a form stored in the USIM.

Alternatively, in case 2-2), the AMF may enable the UE to configure the DPLMN but store it in the operator controlled PLMN, so that in the priority of selecting the PLMN, the selection is performed through the operator controlled PLMN. A DPLMN may be a PLMN that a UE can access, register with and receive services from in a disaster situation. If the UE successfully registers with the HPLMN, information about such a DPLMN may be included in the registration accept message and transmitted from the AMF to the UE.

In one embodiment, among the PLMNs that the UE can access in a disaster situation may be subscribed SNPNs that the UE is subscribed to utilize in a disaster situation.

In one embodiment, among the PLMNs accessible to the UE in the disaster situation, there may be a preferred SNPN that is preferred, i.e., has a preference, for the UE to utilize in the disaster situation.

### Case 2-2-1)

In one embodiment, the PLMN information that the UE can access in a disaster situation and the SNPN information that the UE can access may be included in the DPLMN list in the registration accept message. Upon receipt, the UE may store it in the operator controlled PLMN.

In another embodiment, a UE that has received a DPLMN list may store at least a portion of the information included in the list in an operator controlled PLMN, and may store at least a portion of the remaining information in a DPLMN list that the UE generates and manages separately.

In one embodiment, among the PLMNs accessible to the UE in the disaster situation may be subscribed SNPNs that the UE has subscribed to for use in the disaster situation.

In one embodiment, among the PLMNs accessible to the UE in the disaster situation may be a preferred SNPN that is preferred, i.e., has a preference, for the UE to utilize in the disaster situation.

### Case 2-2-2)

In one embodiment, the PLMN information that the UE can access in a disaster situation and the SNPN information that the UE can access may be included in the registration accept message. In this case, the DPLMN, which is the PLMN to which the UE can register in a disaster situation, is transmitted from the AMF to the UE through the information element. The UE may receive this information and store it in the operator controlled PLMN.

In one embodiment, among the PLMNs accessible to the UE in a disaster situation may be a subscribed SNPN that the UE has subscribed to for use in a disaster situation.

In one embodiment, among the PLMNs accessible to the UE in the disaster situation may be a preferred SNPN that is preferred, i.e., has a preference, for the UE to utilize in the disaster situation.

### Case 3)

The following is an automatic PLMN selection method, where the priority order of the PLMN selection method may be as follows.

In one embodiment, the UE selects the PLMNs in the following order.
1) RPLMN, EPLMN
2) user controlled PLMN and access technology
3) operator controlled PLMN and access technology
4) PLMNs reported by the AS as high quality PLMNs

According to one embodiment, one DPLMN may be selected from among the PLMNs reported as high quality PLMNs by the AS if there is an agreement between the operators.

### Case 3-1)

In one embodiment, the PLMN information that the UE can access in a disaster situation and the SNPN information that the UE can access may be pre-configured in a list of PLMNs that can be used in a disaster situation and configured in the UE in a form stored in the USIM.

In one embodiment, among the PLMNs that the UE can access in a disaster situation may be subscribed SNPNs that the UE is subscribed to utilize in a disaster situation.

In one embodiment, among the PLMNs accessible to the UE in the disaster situation may be preferred SNPNs that are preferred, i.e., have a preference, for the UE to utilize in the disaster situation.

In one embodiment, among the PLMNs accessible to the UE in the disaster situation, there may be a high priority SNPN that is given a high priority for the UE to utilize in the disaster situation.

Alternatively, in Case 3-2),
Among the high quality PLMNs that satisfy the signal strength and signal quality, the method of storing in a DPLMN list the PLMNs that the UE is allowed to access by agreement between the operators may be performed. Here, the DPLMN may be a PLMN to which the UE can access, register with, and receive services from in a disaster situation.

In one embodiment, the PLMNs accessible to the UE in the disaster situation may include subscribed SNPNs that the UE is subscribed to utilize in the disaster situation.

In one embodiment, among the PLMNs accessible to the UE in the disaster situation may be preferred SNPNs that are preferred, i.e., have a preference, for the UE to utilize in the disaster situation.

In one embodiment, among the PLMNs accessible to the UE in the disaster situation may be a high priority SNPN that is given a high priority for the UE to utilize in the disaster situation.

### Case 4)

Another method is manual PLMN selection, where the user selects one PLMN from a list of PLMNs provided by the UE's AS layer.

On the other hand, when the UE 101 successfully completes the location registration, the selected PLMN becomes the registered PLMN (RPLMN), where RPLMN is the PLMN for which the location registration is successfully completed. Meanwhile, equivalent PLMN (EPLMN) is a PLMN that is treated as equivalent to RPLMN. Also, the visited PLMN (VPLMN) refers to the PLMN when the UE 101 is in roaming state and services are provided to the UE 101.

For steps 251-1 and 253-3 below, step 251-1 is an RRC message between the UE 101 and the 5G RAN 103-03, and the NAS message in step 253-3 may be transmitted from the UE 101 to the AMF 111-03.

With reference to step 251-1, the UE 101 may transmit an RRC connection setup complete message to the 5G RAN 103-03 and may transition to the RRC connection mode.

The RRC message (RRC connection setup complete message) transmitted in steps 251-1 and 253-3 may include a registration request message, which is a type of NAS message, or the RRC message may be piggy backed or concatenated with a registration request message, which is a type of NAS message.

In step 253-3, the UE 101 may send a registration request message to the AMF 111-03. The registration request message may include a disaster indicator to indicate a disaster situation.

Alternatively, for the registration request message transmitted in step 253-3,
Case A) the registration request message may include a UE parameter update support information element, or a UE disaster roaming information update support information element, indicating whether the UE 101 supports disaster roaming information update or disaster roaming and updating additional information, policies, etc. in a disaster situation. In one embodiment, such information may be a generic information element. In another embodiment, such information may be a transparent container information element.
Case A-1) In another embodiment, the transparent container information element may be transmitted securely, for example, encrypted.
Case A-2) Alternatively, in one embodiment, the transparent information element may be configured to be invisible to some nodes in the network and may be verified or judged by an entity capable of verifying the information, such as a UDM, or a collaborative verifying entity.
Case A-3) In one embodiment, the UE 101 may allow the operator serving the UE 101 in a disaster situation to enable the UE 101 to register without security verification of the information in the network, since the UE 101 may be roaming in a disaster situation with the operator to which it is subscribed. In such case, the registration request message may act as a transparent information element.
Case A-4) Alternatively, in one embodiment, the UE 101 may allow registration based on a subscription provided by the operator serving the UE 101 in the temporary situation, since the UE 101 may be roaming in a disaster situation with the operator to which it is subscribed, without security validation of that information in the network.
Case A-5) Alternatively, in one embodiment, the UE 101 may allow registration after validation of the information by an entity that jointly manages such information across operators in the network, since the UE 101 may be roaming in a disaster situation with the operator to which it is subscribed. In such a case, the registration request message may act as a transparent information element.

### Case B. Case C)

On the other hand, in one embodiment, such disaster roaming information update related information may not transmit a separate information element from the UE 101 to the network as described above,
Case B) UE parameter update support information element, or
Case C) UE policy container information element may be delivered.

In step 255, the AMF 111-03 may transmit a registration accept message to the UE 101. In one embodiment, in case 1) since the UE 101 is temporarily enrolled in the operator's network, the registration accept message transmitted from the AMF 111-03 to the UE 101 may include information that establishes a duration for the UE 101 to receive services in the operator's network. For example, for a UE 101 that the AMF 111-03 has temporarily allowed to register in a disaster situation, the registration accept message from the AMF 111-03 to the UE 101 may include information configuring a timer for the duration for which the UE 101 is allowed to receive services.

Alternatively, the AMF 111-03 may configure an identifier or bit indicating a disaster situation and send it to the UE 101.

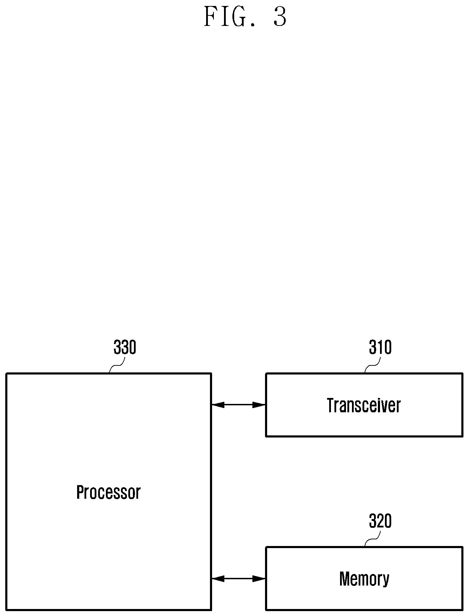

FIG. 3 is a diagram illustrating a configuration of a terminal according to one embodiment of the present disclosure.

As shown in FIG. 3, a terminal of the present disclosure may include a transceiver 310, a memory 320, and a processor (control unit) 330. The processor 330, transceiver 310, and memory 320 of the terminal may operate in accordance with the communication methods of the terminal described above. However, the components of the terminal are not limited to the foregoing examples. For example, the terminal may include more components or fewer components than the aforementioned components. Furthermore, the processor 330, transceiver 310, and memory 320 may be implemented in a form of a single chip.

The transceiver 310, which collectively refer to the receiving unit of the terminal and the transmitting unit of the terminal, may transmit and receive signals to and from a base station or network entity. The signals to and from the base station may include control information and data. To this end, the transceiver 310 may be constituted of an RF transmitter that up-converts and amplifies the frequency of the transmitted signal, and an RF receiver that amplifies the received signal with low noise and down-converts the frequency. However, this is only one embodiment of the transceiver 310, and the components of the transceiver 310 are not limited to the RF transmitter and RF receiver. The transceiver 310 may be referred to by terms such as transmitter, receiver, communication unit, etc.

In addition, the transceiver 310 may include wired and wireless transmitters and receivers and may include various configurations for transmitting and receiving signals.

In addition, the transceiver 310 may receive signals through a wireless channel, output the signals to the processor 330, and transmit the signals output from the processor 330 through the wireless channel.

In addition, the transceiver 310 may receive communication signals, output them to the processor, and transmit the signals output from the processor to a network entity through a wired or wireless network.

The memory 320 may store programs and data required for operation of the terminal. In addition, the memory 320 may store control information or data included in signals acquired by the terminal. The memory 320 may be constituted of a storage medium, such as a ROM, RAM, hard disk, CD-ROM, and DVD, or a combination of storage media.

The processor 330 may control a series of processes to enable the terminal to operate in accordance with the embodiments of the present disclosure described above. The processor 330 may include at least one or more processors. For example, the processor 330 may include a communication processor (CP) that performs controls for communications and an application processor (AP) that controls higher layers, such as applications. The processor 330 and the transceiver 310 may be coupled such that the transceiver 310 may perform transmission and reception under the control of the processor 330.

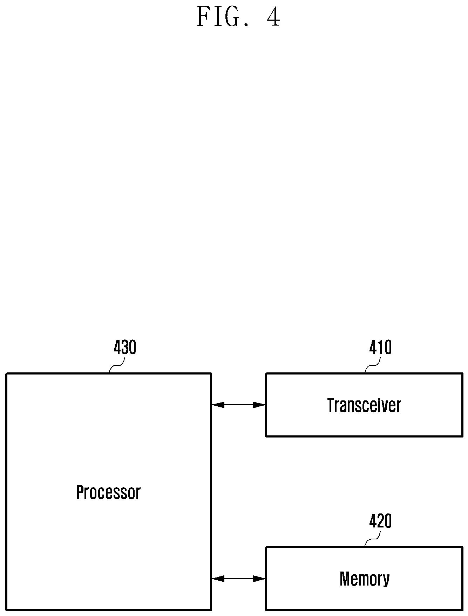

FIG. 4 is a diagram illustrating a configuration of a network entity according to one embodiment of the present disclosure.

As illustrated in FIG. 4, a network entity of the present disclosure may include a transceiver 410, a memory 420, and a processor 430. The processor 430, transceiver 410, and memory 420 of the network entity may operate in accordance with the communication methods of the network entity described above. However, the components of the network entity are not limited to the examples described above. For example, the network entity may include more or fewer components than the aforementioned components. Furthermore, the processor 430, transceiver 410, and memory 420 may be implemented in a form of a single chip. The network entity may include network functions (NFs) such as the Access and Mobility management Function (AMF), Session Management Function (SMF), Policy and Charging Function (PCF), Network Exposure Function (NEF), Unified Data Management (UDM), and User Plane Function (UPF) described above. In addition, a base station may be included.

The transceiver 410, collectively referred to as a receiving unit of a network entity and a transmitting unit of a network entity, may transmit and receive signals to and from a terminal or other network entity. The signals transmitted and received may include control information and data. To this end, the transceiver 410 may be constituted of an RF transmitter that up-converts and amplifies the frequency of the transmitted signal, and an RF receiver that amplifies the received signal with low noise and down-converts the frequency. However, this is only one embodiment of the transceiver 410, and the components of the transceiver 410 are not limited to the RF transmitter and RF receiver. The transceiver 410 may include a wired or wireless transceiver, and may include various configurations for transmitting and receiving signals. The transceiver 410 may be referred to by terms such as transmitter, receiver, communication unit, etc.

In addition, the transceiver 410 may receive signals through a communication channel (e.g., a wireless channel), output the signals to the processor 430, and transmit the signals output from the processor 430 through the communication channel.

In addition, the transceiver 410 may receive communication signals, output them to the processor, and transmit the signals output from the processor to a terminal or other network entity through a wired or wireless network.

The memory 420 may store programs and data required for operation of the network entity. In addition, the memory 420 may store control information or data included in signals acquired from the network entity. The memory 420 may be constituted of a storage medium, such as a ROM, RAM, hard disk, CD-ROM, and DVD, or a combination of storage media.

The processor 430 may control a series of processes to enable the network entity to operate in accordance with the embodiments of the present disclosure described above. The processor 430 may include at least one or more processors. For example, the processor 430 may include a communication processor (CP) that performs controls for communications and an application processor (AP) that controls higher layers, such as applications. The processor 430 and the transceiver 410 may be coupled such that the transceiver 410 may perform transmission and reception under the control of the processor 430.

The methods according to the claims of the disclosure or the embodiments described herein may be implemented in the form of hardware, software, or a combination of hardware and software.

When implemented as software, a computer-readable storage medium storing one or more programs (software modules) may be provided. The one or more programs stored on the computer-readable storage medium are configured for execution by one or more processors in the electronic device. The one or more programs include instructions that cause the electronic device to perform methods according to the claims of the disclosure or embodiments described herein.

These programs (software modules, software) may be stored in random access memory (RAM), non-volatile memory including flash memory, read-only memory (ROM), electrically erasable programmable read-only memory (EEPROM), magnetic disc storage devices, compact disc-ROM (CD-ROM), digital versatile discs (DVDs) or other forms of optical storage devices, magnetic cassettes. Alternatively, they may be stored in memory constituted of some or all of these. In addition, each of the constituent memories may include multiple copies.

In addition, the program may be stored on an attachable storage device that is accessible through such a communication network as an Internet, an intranet, a local area network (LAN), a wide area network (WAN), or a storage area network (SAN), or any combination thereof. Such a storage device may be accessible to a device performing embodiments of the present disclosure through an external port. In addition, a separate storage device on a communication network may be accessible to the device performing the embodiments of the present disclosure.

In the specific embodiments of the disclosure described above, the components included in the disclosure have been expressed in the singular or plural, depending on the specific embodiment presented. However, the singular or plural expression has been chosen for ease of description and to suit the context presented, and the disclosure is not limited to the singular or plural components, and components expressed in the plural may be constituted in the singular, or components expressed in the singular may be constituted in the plural.

On the other hand, in the detailed description of the present disclosure, specific embodiments have been described, but of course, various modifications are possible without departing from the scope of the present disclosure. Therefore, the scope of the present disclosure should not be limited to the described embodiments but should be determined not only by the scope of the patent claims described later, but also by the scope of this patent claim and equivalents.

## Claims

1. A method of a terminal in a wireless communication system, the method comprising:
receiving, from a user data management (UDM) or a first access and mobility management function (AMF), capability information about the ability to utilize a communication network of a second communication provider in the event of a service disruption of a communication network of a first communication provider to which the terminal is subscribed;
confirming the service disruption of the communication network of the first communication provider;
performing a scan of the public land mobile network (PLMN) or standalone non public network (SNPN) of the second communication provider; and
selecting a PLMN or SNPN to perform the registration based on a result of the scan.

2. The method of claim 1, further comprising:
transmitting a first registration request message to the first AMF; and
receiving a first registration accept message from the first AMF, wherein the first registration accept message comprises information relating to a standalone non public network (SNPN).

3. The method of claim 2, wherein it is characterized that the information related to the SNPN comprises information about at least one of a subscribed SNPN, a preferred SNPN, or a high priority SNPN.

4. The method of claim 2, wherein the first registration accept message comprises a disaster PLMN (DPLMN) list and it is characterized that selecting the PLMN or SNPN is performed based on PLMN information or SNPN information included in the DPLMN list.

5. The method of claim 2, further comprising storing the list of disaster PLMNs (DPLMNs) included in the first registration accept message as operator controlled PLMNs, wherein it is characterized that selecting a PLMN or SNPN is performed based on PLMN information or SNPN information included in the operator controlled PLMN.

6. The method of claim 1, further comprising transmitting a second registration request message to a second AMF connected to the RAN of the second communication provider, wherein the second registration request message comprises a disaster indicator for a disaster condition of the first communication provider.

7. The method of claim 6, further comprising receiving a second registration accept message in response to the second registration request message from a second AMF of the core network connected to the RAN of the second communication provider,
wherein the second registration accept message further comprises an identifier or bit indicating a disaster situation, and
wherein the second registration accept message further comprises timer information for a duration for which the service from the second communication provider is allowed to the terminal.

8. The method of claim 1, wherein selecting the PLMN or SNPN is performed based on the following priorities:
(1) a registered PLMN (RPLMN), an equivalent PLMN (EPLMN), or a disaster PLMN (DPLMN)
(2) a user-controlled PLMN
(3) an operator controlled PLMN
(4) a PLMN reported by an access stratum (AS)

9. A terminal in a wireless communication system comprising:
a transceiver; and
a control unit configured to:
receive, from a user data management (UDM) or a first access and mobility management function (AMF), capability information about the ability to utilize the communication network of the second communication provider when a service disruption occurs in the communication network of the first communication provider to which the terminal subscribes;
confirm the service disruption of the communication network of the first communication provider;
perform a scan on the public land mobile network (PLMN) or standalone non public network (SNPN) of the second communication provider; and
select a PLMN or SNPN to perform a registration based on a result of the scan.

10. The terminal of claim 9,
wherein the control unit is further configured to:
transmit a first registration request message to the first AMF; and
receive a first registration accept message from the first AMF,
wherein the registration accept message comprises information relating to a standalone non public network (SNPN), and
wherein it is characterized that the information relating to the SNPN comprises information about at least one of a subscribed SNPN, a preferred SNPN, or a high priority SNPN.

11. The terminal of claim 10,
wherein the first registration accept message comprises a DPLMN (disaster PLMN) list, and
wherein it is characterized that the control unit selects a PLMN to perform registration based on PLMN information or SNPN information included in the DPLMN list.

12. The terminal of claim 10,
wherein the control unit is further configured to store the disaster PLMN (DPLMN) list included in the first registration accept message as an operator controlled PLMN and is further configured to select a PLMN or SNPN to perform registration based on PLMN information or SNPN information included in the operator-controlled PLMN.

13. The terminal of claim 9,
wherein the control unit is further configured to transmit a second registration request message to a second AMF connected to the RAN of the second communication provider, and
wherein a disaster indicator for a disaster situation in the communication network of the first communication provider is included in the second registration request message.

14. The terminal of claim 13,
wherein the control unit is further configured to receive a second registration accept message for the second registration request message from a second AMF of the core network connected to the RAN of the second communication provider,
wherein the second registration accept message further comprises an identifier or bit indicating a disaster situation, and
wherein the second registration accept message further comprises timer information for a duration for which the service of the second communication provider is allowed to the terminal.

15. The terminal of claim 9, wherein the control unit is further configured to select a PLMN or SNPN to register based on the following priorities.
(1) a registered PLMN (RPLMN), an equivalent PLMN (EPLMN), or a disaster PLMN (DPLMN)
(2) a user controlled PLMN
(3) an operator controlled PLMN
(4) PLMN reported by access stratum (AS)
